# EUROPÄISCHE PATENTSCHRIFT

(11) **EP 2 871 311 B1**
(45) Veröffentlichungstag und Bekanntmachung des Hinweises auf die Patenterteilung: **04.05.2016**
(21) Anmeldenummer: 13192573.7
(22) Anmeldetag: 12.11.2013
(51) Int. Cl.: E05B 65/52, G01G 19/58, E05B 73/00

(54) **Kombinationsvorrichtung mit Gepäckwaage und mit Gepäckschloss**
Combination device with luggage weighing scale and luggage lock
Dispositif combiné doté d'une balance à bagage et d'un cadenas à bagage

(43) Veröffentlichungstag der Anmeldung: 13.05.2015
(73) Patentinhaber: Leifheit AG, 56377 Nassau (DE)
(72) Erfinder: Denk, Andre, 45481 Müllheim an der Ruhr (DE); Emter, Artjom, 56077 Koblenz (DE); Stange, Pedro, 65582 Diez (DE); Spielbusch, Patrick, 56068 Koblenz (DE)
(74) Vertreter: Tersteegen, Felix

(56) Entgegenhaltungen:
- WO-A1-2010/054372
- WO-A1-2013/154692
- CN-U- 202 324 842
- GB-A- 2 500 448
- US-A1- 2013 036 777

## Beschreibung

Die Erfindung betrifft eine Vorrichtung, die eine handgehaltene Gepäckwaage zum Wiegen von Gepäckstücken und ein Schloss zum Verschließen oder ortsfestem Anschließen eines Gepäckstücks zu einer Kombinationsvorrichtung kombiniert.

Eine Gepäckwaage mit Sicherheitsschloss dieser Art sind aus der britischen Offenlegungsschrift GB 2 500 448 A1 bekannt. Auch die Druckschriften US 2013/0036777 A1 und WO 2013/154692 A1 offenbaren handgehaltene Gepäckwaagen, die als Kombinationsvorrichtung mit der Zusatzfunktion eines Gepäckschlosses ausgebildet sind.

Derartige Gepäckwaagen weisen als Zusatzfunktion zur eigentlichen Wiegefunktion auch die Möglichkeit auf, ein Gepäckstück zu verschließen oder an einem ortsfesten Gegenstand wie zum Beispiel einem Geländer anzuschließen und so das Gepäck vor unbefugtem Zugriff oder vor Entwendung zu schützen. Der Vorteil der Integration eines Schlosses als Zusatzfunktion in eine derartige handgehaltene Gepäckwaage ist unter anderem, dass der Nutzer, der die Gepäckwaage während einer Reise ohnehin bei sich trägt, nicht auf ein zusätzliches Sicherheitsschloss, also einen weiteren Gegenstand, zurückgreifen muss, wenn er das Gepäckstück vorübergehend unbeaufsichtigt lässt. Er kann das Gepäckstück mit der Waage außerdem jederzeit, zum Beispiel kurz vor dem Check-In an einem Flughafen, wiegen und kontrollieren, ob das zulässige Gepäckgewicht eingehalten wird, auch wenn das Gepäck noch kurz vorher, zum Beispiel nach einem Duty-Free Einkauf, mit weiteren Gegenständen bepackt worden ist.

Nachteilig an den bereits bekannten Gepäckwaagen mit dieser Zusatzfunktion ist, dass das jeweils vorgesehene Gehäuse der Gepäckwaage auch das eigentliche Schlossgehäuse des Gepäckschlosses bildet, also den Teil des Schlosses, in dem die Schließmechaniken aufgenommen sind und der das jeweilige Schließteil, also etwa den Bügel eines Bügelschlosses, bei dem Versuch, das Schloss aufzubrechen, im Schließzustand hält und der mit seinem Material der Kraft, die zum Aufbrechen des Schlosses verwendet wird, widerstehen muss. Auch sind die konstruktiven Details des Gepäckschlosses, insbesondere die Verriegelungs- und Freigabemechanismen der eigentlichen Funktionsmechanik, die Lagerung von Zahlenrädchen der Kombinationsschlösser und die weiteren die Schlossfunktion gewährleistenden Mechaniken integraler Teil des Gehäuses, in dem auch die Gewichtsmesseinheitin Form einer Wägezelle aufgenommen ist.

So sind beispielsweise die Zahlenrädchen bei der in US 2013/0036777 A1 beschriebenen Vorrichtung auf werkstoffeinstückig mit dem Schlossgehäuse ausgebildeten Zapfen gelagert. Ebenso ist der Schließriegel bzw. die Entriegelungssperre von werkstoffeinstückig im Gehäuse ausgebildeten Stegen und Nuten gehalten und geführt.

Gleiches gilt auch für die in der Druckschrift GB 2 500 448 A1 offenbarte Gepäckwaage, die ein Gehäuse aufweist, in dem sowohl die Gewichtsmesseinheit aufgenommen ist und das zum anderen die Funktionsmechanik des Gepäckschlosses aufnimmt sowie das Schlossgehäuse bildet.

Die vorstehend beschriebenen Ausgestaltungen haben den Nachteil, dass mit einem mutwilligen Zerstören des in der Regel aus Kunststoff bestehenden und auch das Schlossgehäuse bildenden Gehäuses auch das Gepäckschloss zerstört wird und so die Sicherheitsfunktion leicht aufgehoben werden kann. Außerdem ist bei den bekannten Vorrichtungen nicht gewährleistet, dass Sicherheitsschloss und Gewichtsmesseinheit ausreichend voneinander entkoppelt sind, denn eine Belastung der als Wägezelle ausgebildeten Gewichtsmesseinheit bringt jeweils auch eine Belastung des Sicherheitsschlosses und von dessen Bauteilen mit sich. Schließlich sind die bekannten Vorrichtungen in konstruktiver Hinsicht sehr komplex aufgebaut und erfordern aufwendige Herstellungswerkzeuge und eine feingliedrige Montage.

Aufgabe der Erfindung ist es daher, eine Kombinationsvorrichtung der eingangs genannten Art zur Verfügung zu stellen, die eine erhöhte Sicherheit der Vorrichtung bei mutwilliger Zerstörung bietet und die trotz einfacher konstruktiver Ausgestaltung und Montage sowie einfacher Bedienung eine hohe Messgenauigkeit beim Wiegevorgang gewährleistet.

Diese Aufgabe wird nach der Erfindung dadurch gelöst, dass das Gepäckschloss eine strukturell autarke Funktionseinheit der Kombinationsvorrichtung bildet.

Die Integration des Gepäckschlosses als strukturell autarke Funktionseinheit in die Kombinationsvorrichtung bedeutet insbesondere, dass die Gepäckwaage als eine erste Funktionseinheit der Kombinationsvorrichtung und das Gepäckschloss als eine zweite Funktionseinheit der Kombinationsvorrichtung zwar in einer einzigen Kombinationsvorrichtung zusammengefasst sind, aber zwei voneinander unabhängige funktionelle Einheiten in der Weise bilden können, dass weder beim Wiegen eines Gepäckstücks das Gepäckschloss noch beim Ausüben von Kräften auf das Gepäckschloss die Gewichtsmesseinheit belastet wird. Ein Kraftnebenschluss, der zum Beispiel das Wiegeergebnis verfälscht, weil die Gewichtsmesseinheit nicht die gesamte Gewichtskraft erfasst, wird vermieden. Auch wird eine Belastung des Sicherheitsschlosses beim Wiegevorgang vermieden.

Eine solche Ausgestaltung hat zudem den Vorteil, dass das Gepäckschloss nicht durch eine mutwillige Zerstörung des zum Beispiel ein Griffteil der funktionellen Einheit "Gepäckwaage" bildenden Gehäuses zerstört werden kann. Das bevorzugt kompakt auszubildende Gepäckschloss kann aus stabilem und schwerem Material, zum Beispiel gehärtetem Metall, mit integrierter Schließmechanik hergestellt werden, ohne das gleich das gesamte Griffteil aus einem solchen Werkstoff hergestellt werden müsste oder das bei der Herstellung des Griffteils die teils feingliedrigen und komplexen Strukturen und Mechanismen der Schlossmechanik im Griffteil abgebildet werden müssten. Dies vereinfacht die Gestaltung der Herstellungswerkzeuge, zum Beispiel eines Spritzgusswerkzeugs für das Griffteil, erheblich. Auch kann der Hersteller auf am Markt erhältliche Sicherheitsschlösser zurückgreifen, für die der Hersteller dann im zum Beispiel das Griffteil der Funktionseinheit "Gepäckwaage" bildenden Kunststoffgehäuse lediglich eine geeignete Aufnahme vorsehen muss, in der das Gepäckschloss als strukturell eigenständige funktionelle Einheit aufgenommen ist.

In einer bevorzugten Ausführungsform ist vorgesehen, dass die Vorrichtung ein Griffteil aufweist, das vom Nutzer ergriffen wird, um das Gepäckstück für einen Wiegevorgang anzuheben, wobei das Gepäckschloss ein Schlossgehäuse aufweist, das als vom Griffteil strukturell autarkes Bauteil, insbesondere als vom Griffteil ursprünglich separates Bauteil, in oder an dem Griffteil angeordnet ist.

Das Griffteil weist bevorzugt ein Griffgehäuse auf, das eine Aufnahme zum Einsetzen des Schlossgehäuses des Gepäckschlosses ausbildet. Neben dem Schlossgehäuse kann außerdem eine Gewichtsmesseinheit in dem Griffgehäuse aufgenommen sein. Das Gepäckschloss kann insbesondere als ein Bügelschloss ausgebildet sein, dessen bevorzugt massiver und starrer Metallbügel insbesondere seitlich aus dem Griffteil herausragen kann.

Das Griffgehäuse ist in einer vorteilhaften Ausgestaltung von zwei Halbschalen gebildet, die die weiteren Funktionsteile, insbesondere die Gewichtsmesseinheit und das Schlossgehäuse zwischen sich aufnehmen. Es kann aber auch vorgesehen sein, dass das als strukturell autarke Funktionseinheit vorgesehene Gepäckschloss oder dessen Schlossgehäuse bei der Herstellung der Kombinationsvorrichtung in ein Spritzgusswerkzeug eingelegt wird, so dass die fertig gestellte Kombinationsvorrichtung ein vom Kunststoff des Griffteils umspritztes Schlossgehäuse aufweist. Hierbei ist lediglich darauf zu achten, dass die für die Bedienung des Schlosses notwendigen Bedienelemente beim Spritzgussvorgang von eingespritztem Kunststoff freigehalten werden.

Alternativ hierzu ist denkbar, dass das Griffteil von einem Band oder einem ähnlichen flexiblen, strangartigen Gegenstand gebildet wird und die Gewichtsmesseinheit und das Schlossgehäuse in einem vom Griffteil separaten Gehäuse angeordnet sind.

Weiter kann vorgesehen sein, dass die Kombinationsvorrichtung ein Trageteil in Form eines Seils, eines Bandes oder einer Kette aufweist, mit dem eine geschlossene Trageschlaufe ausgebildet werden kann und das an einem mit der Gewichtsmesseinheit verbundenen Krafteinleitungsglied zumindest vorübergehend eingehängt oder auf sonstige Weise hiermit verbunden werden kann. Vorteilhaft ist das als Seil, Band oder Kette ausgebildete Trageteil jedoch dauerhaft an dem Krafteinleitungsglied angeordnet, so dass ein versehentliches Abhandenkommen ausgeschlossen ist.

Dieses Trageteil dient in einer vorteilhaften Ausgestaltung der Kombinationsvorrichtung sowohl als Trageteil zur Herstellung einer Trageschlaufe beim Wiegevorgant als auch als Sicherungsteil zur Herstellung einer geschlossenen Sicherungsschlaufe zum Verschließen oder ortsfesten Anschließen des Gepäckstücks. Zu diesem Zweck weist das als Seil, Band oder Kette ausgestaltete kombinierte Trage- und Sicherungsteil Kopplungsglieder zur wahlweisen Kopplung des Seils, des Bandes oder der Kette mit dem Krafteinleitungsglied (Wiegevorgang) oder dem Schloss (Herstellung der Sicherungsschlaufe) auf. Bevorzugt sind es ein und dieselben Kopplungsglieder, die sowohl zur Kopplung des kombinierten Trage- und Sicherungsteils mit dem Krafteinleitungsglied als auch zur Kopplung des Trage- bzw. Sicherungsteils mit dem Schloss dienen. In beiden Fällen wird durch geeignete Ausgestaltung der Kopplungsglieder verhindert, dass sich das kombinierte Trage- und Sicherungsteil beim Wiegen bzw. nach dem Schließen des Schlosses von der Kombinationsvorrichtung zu lösen vermag.

Es kann ferner vorgesehen sein, dass am kombinierten Trage- und Sicherungsteil ein erstes Kopplungsglied und ein zweites Kopplungsglied im Abstand voneinander vorgesehen sind, die zum Herstellen einer geschlossenen Sicherungsschlaufe beide mit einer Verriegelung des Schlosses und zur Herstellung einer Trageschlaufe beide mit dem Krafteinleitungsglied zu verbinden sind. Das erste Kopplungsglied ist bevorzugt an einem ersten Ende des kombinierten Trag- und Sicherungsteil angeordnet, das zweite Kopplungsglied ist bevorzugt an einem zweiten Ende des kombinierten Trag- und Sicherungsteils angeordnet.

In einer vorteilhaften Ausgestaltung ist das erste Kopplungsglied in einem Abstand von einer ersten Stelle des kombinierten Trage- und Sicherungsteils angeordnet, mit der das Trage- und Sicherungsteil dauerhaft mit der Vorrichtung, insbesondere mit dem Krafteinleitungsglied, verbunden ist, wobei dieser Abstand zwischen ersten Kopplungsglied und der besagten ersten Stelle so bemessen ist, dass der zwischen dem ersten Kopplungsglied und der besagten ersten Stelle liegende Abschnitt des kombinierten Trage- und Sicherungsteils auch dann kräftefrei bleibt, wenn das erste Kopplungsglied mit der Verriegelung des Gepäckschlosses zur Bildung einer Sicherungsschlaufe verbunden ist und die Sicherungsschlaufe belastet wird.

Das Sicherheitsschloss kann als Kombinationsschloss ausgebildet oder mit einem klassischen Schließzylinder ausgerüstet sein. In beiden Fällen kann die Möglichkeit, dass das Schloss mittels eines TSA-Schlüssels zu öffnen ist, vorgesehen werden.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: eine Gesamtansicht einer ersten Ausgestaltung einer Kombinationsvorrichtung aus einer handgehaltenen Gepäckwaage und einem Gepäckschloss,
- Fig. 2: die Vorrichtung aus Figur 1 mit dem innerhalb eines Griffteils der Gepäckwaage angeordneten Schlossgehäuses des Gepäckschlosses,
- Fig. 3: das geöffnete Gepäckschloss und das Einhängen einer Sicherungsschnur,
- Fig. 4: die Nutzung der Kombinationsvorrichtung nach Figur 1 als Gepäckschloss,
- Fig. 5: die Nutzung der Kombinationsvorrichtung nach Figur 1 als Gepäckwaage,
- Fig. 6: eine Gesamtansicht einer zweiten Ausgestaltung einer Kombinationsvorrichtung aus einer handgehaltenen Gepäckwaage und einem Gepäckschloss,
- Fig. 7: die Nutzung der Kombinationsvorrichtung nach Figur 6 als Gepäckschloss,
- Fig. 8: die Nutzung der Kombinationsvorrichtung nach Figur 6 als Gepäckwaage,
- Fig. 9a-9c: das Einhängen und die Ausgestaltung von an einem kombinierten Trageund Sicherungsteil angeordneten Kopplungsgliedern in eine Verriegelung des Gepäckschlosses.

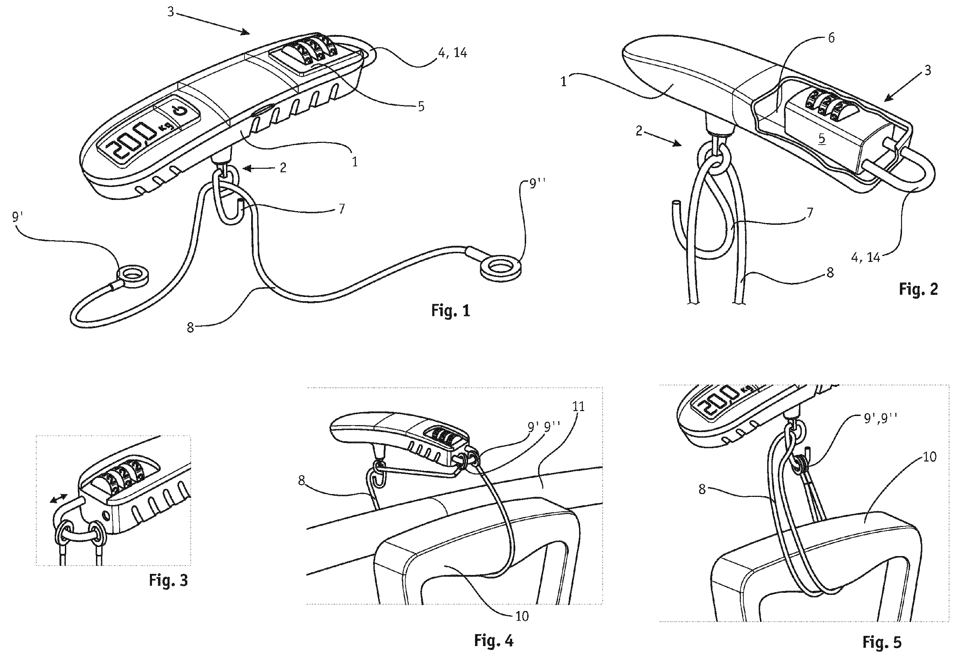

In Figur 1 ist eine Kombinationsvorrichtung aus einer handgehaltenen Gepäckwaage und einem Gepäcksicherheitsschloss in einer Gesamtansicht gezeigt.

Die Kombinationsvorrichtung weist ein Griffteil 1 auf, das der Nutzer beim Wiegen eines Gepäckstückes umgreift, um das Gepäckstück für einen Wiegevorgang anzuheben. An dem Griffteil 1 ist ein elektronisches Display zur Darstellung des gemessenen Gewichtswertes und ein An-/Ausschalter, der auch zum Auslösen einer Tara-Funktion verwendet werden kann, vorgesehen.

An der Unterseite des Griffteils 1 ist ein Krafteinleitungsglied 2 vorgesehen, das mit einer im Inneren des Griffteils 1 angeordneten Gewichtsmesseinheit in Form einer Wägezelle (nicht gezeigt) verbunden ist, mittels der die Gewichtskraft des zu wiegenden Gepäckstücks gemessen wird.

Wie Figur 1 und Figur 2 verdeutlichen, ist in das Griffteil 1 ein Gepäckschloss 3 eingelassen, das hier beispielhaft als Kombinationsbügelschloss dargestellt ist und dessen Schließbügel 4 seitlich aus dem Griffteil herausragt. Figur 2 verdeutlicht, dass das Gepäckschloss, insbesondere dessen massives, metallenes Schlossgehäuse 5, als strukturell vom Griffteil 1 unabhängige Funktionseinheit in das Griffteil 1 integriert ist. Das Gepäckschloss 3 mit Schließbügel 4 und Schlossgehäuse 5 ist in einer im Griffteil 6 vorgesehenen Aufnahme 6 eingelegt, ansonsten aber ein vom Griffteil 6 separates, strukturell eigenständiges Bauteil. Ersichtlich wird auch ein mutwilliges Zerstören des Griffteils 1 nicht die Zerstörung des Gepäckschlosses 3 zur Folge haben.

Das Gepäckschloss kann in die in Figur 2 gezeigte Aufnahme 6 eingelegt sein, es kann aber auch darin verklemmt, verklebt oder verschraubt sein oder beim Herstellungsprozess von dem Material des Griffteils umspritzt sein.

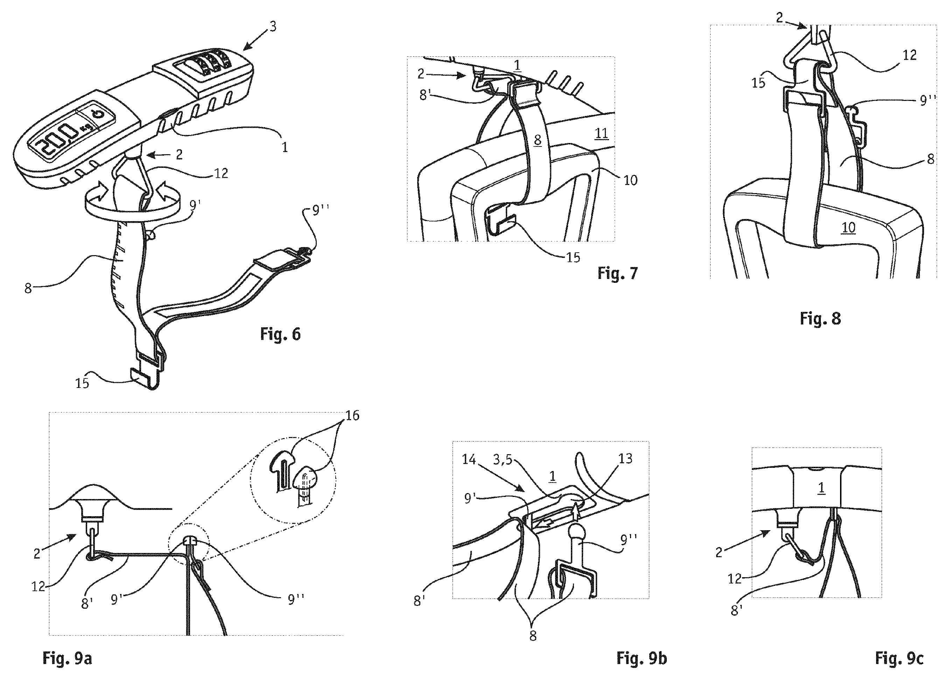

Das Krafteinleitungsglied 2 umfasst ein Einhängeteil 7, das in der in Figur 1 bis Figur 5 gezeigten Ausführungsform beispielhaft die Form eines einseitig offenen Hakens aufweist. Das Einhängeteil bildet eine geschlossene Durchtrittsöse, durch die ein kombiniertes Trage- und Sicherungsteil 8 hindurchgeführt und gehalten ist. Das kombinierte Trage- und Sicherungsteil 8 ist in der in Figur 1 bis Figur 5 dargestellten Ausführungsform von einem Kunststoff ummantelten Drahtseil gebildet, es kann aber auch, wie Figur 6 bis Figur 9 verdeutlichen, von einem gurtartigen Band gebildet sein. Auch eine Gliederkette oder ein sonstiges in sich flexibles, strangartiges Bauteil kommt als kombiniertes Trage- und Sicherungsteil in Betracht.

Das Trage- und Sicherungsteil 8 weist an beiden Enden Kopplungsglieder 9', 9" auf, die bei dem in Figur 1 bis Figur 5 gezeigten Ausführungsbeispiel von geschlossenen Metallösen gebildet sind. Diese haben eine innere Öffnung mit einer Abmessung, die es erlaubt, die Kopplungsglieder sowohl mit dem Krafteinleitungsglied 2 zur Bildung einer Trageschlaufe (Figur 5) als auch mit dem Schließbügel 4 zur Bildung einer Sicherungsschlaufe (Figur 3 und Figur 4) zu verbinden. Die äußere Abmessung der Kopplungsglieder ist wiederum derart bemessen, dass diese nicht durch die am Krafteinleitungsglied 2 gebildete Durchtrittsöse hindurch passen. Damit ist wirksam verhindert, dass sich das kombinierte Trage- und Sicherungsteil von der Kombinationsvorrichtung lösen und verloren gehen kann.

Figur 1 bis Figur 5 verdeutlichen, dass bei einer Belastung des kombinierten Trage- und Sicherungsteils unabhängig vom Einsatzzweck die jeweils nicht verwendete funktionelle Einheit der Kombinationsvorrichtung nicht belastet wird. So bleibt bei einem Wiegevorgang mittels der Gepäckwaage (Figur 5) das Gepäckschloss und bei einer Belastung der mittels des Gepäckschlosses geschlossenen Sicherungsschlaufe die Gepäckwaage mit der Gewichtsmesseinheit unbelastet. Figur 4 und Figur 5 zeigen jeweils den Griff 10 eines Gepäckstücks, der in Figur 5 mittels der mit der Verriegelung des Gepäckschlosses gekoppelten Kopplungsglieder an einem Handlauf 11 eines Geländers befestigt ist.

Figur 6 bis Figur 9a-c zeigt eine alternative Ausgestaltung einer aus einer handgehaltenen Gepäckwaage und einem Gepäckschloss bestehenden Kombinationsvorrichtung. Die Ausgestaltung ist hinsichtlich des Griffteils 1 mit Krafteinleitungsglied 2 und darin als strukturell autarkes Bauteil vorgesehenem Gepäckschloss 3 weitgehend identisch mit der in Figur 1 bis Figur 5 vorgesehenen Ausgestaltung. Nachfolgend werden daher vorwiegend die Unterschiede zu der in Figur 1 bis Figur 5 gezeigten Ausführungsform eingehender beschrieben.

Anstelle eines Drahtseils mit an den jeweiligen Enden vorgesehenen Kopplungsgliedern kommt als kombiniertes Trage- und Sicherungsteil 8 ein multifunktionelles, gurtähnliches Band zum Einsatz. Dieses ist unlösbar an einem gegenüber dem Griffteil 1 drehbar gelagerten Halteteil 12 gehalten, das beispielhaft die Form einer geschlossenen Drahtbügelöse aufweist.

An dem kombinierten Trage- und Sicherungsteil sind im Abstand zueinander ein erstes Kopplungsglied 9' und ein zweites Kopplungsglied 9" angeordnet, die zur Herstellung einer in sich geschlossenen Sicherungsschlaufe dienen. Zur Herstellung der geschlossenen Sicherungsschlaufe werden die beiden Kopplungsglieder 9', 9" in eine Verriegelung des Gepäckschlosses 3 eingeführt.

Bei dem in den Figuren gezeigten konkreten Ausführungsbeispiel weisen die beiden stiftartigen Kopplungsglieder 9', 9" an ihrem freien Ende Erweiterungen 16 auf, mit denen Sie im Bereich einer Einführöffnung 13 in eine Verriegelung 14 in Form eines Verriegelungsschlitzes eingeführt werden können, der als Teil des innerhalb des Griffteils 1 liegenden Schlossgehäuses 5 von außen zugänglich ist,. Anschließend können Sie entlang des Verriegelungsschlitzes von der Einführposition in die Verriegelungsposition überführt werden, in der sie den Verriegelungsschlitz innenseitig mit den Erweiterungen 15 hintergreifen und durch einen Sperrmechanismus des Gepäckschlosses an der Rückführung in die Einführposition gehindert sind. Die Kopplungsglieder 9', 9" können nur bei entriegeltem Gepäckschloss wieder aus der Verriegelungsposition in die Einführposition zurückgeführt werden. Dieser Vorgang ist anschaulich in den Figuren 9a-c illustriert.

Figur 9a zeigt beispielhaft eine besonders vorteilhafte Ausgestaltung der beiden Kopplungsglieder 9', 9", die zwei korrespondierende Hälften, insbesondere eine männliche und einen weiblichen Teil eines zusammensteckbaren, einheitlichen Kopplungsgliedes darstellen. In Figur 9a ist beispielhaft in einem Kopplungsglied 9' eine Erhebung und in dem korrespondierenden Kopplungsglied 9" auf die Erhebung abgestimmte Vertiefung vorgesehen. Zusätzlich oder alternativ hierzu vorgesehen sein, dass die Kopplungsglieder Mittel wie beispielsweise Magnete, eine Klemmverbindung oder eine lösbare Schnappverbindung umfassen, die die beiden Kopplungsglieder 9', 9" aneinander halten, um ein einfaches gemeinsame Einführen in den Verriegelung 14 zu gewährleisten.

Figur 7 zeigt in Anlehnung an Figur 4 die Kombinationsvorrichtung bei Nutzung der Funktionseinheit "Gepäckschloss". Auch hier ist ein Gepäckstück dadurch an dem Handlauf 11 eines Geländers gesichert, dass eine mittels des kombinierten Trage- und Sicherungsteils 8 und des Gepäckschlosses 3 hergestellte geschlossene Sicherungsschlaufe neben dem Griff 10 eines Gepäckstücks den Handlauf 11 mit einschließt. Figur 7 und auch Figur 9c verdeutlichen dabei, dass das erste Kopplungsglied 9' in einem so großen Abstand von der am Krafteinleitungsglied 2 befestigten Stelle des Trage- und Sicherungsteils 8 vorgesehen ist, dass der zwischen dem ersten Kopplungsglied 9' und der besagten Stelle liegende Abschnitt 8' des Trage- und Sicherungsteils 8 auch bei einer Belastung der geschlossenen Sicherungsschlaufe kräftefrei bleibt. So ist gewährleistet, dass eine Belastung des Schlosses nicht zu einer Belastung der Gewichtsmesseinheit führt.

Die Verwendung der Funktionseinheit "Gepäckwaage" der Kombinationsvorrichtung verdeutlicht Figur 8. Das kombinierte Trag- und Sicherungsteil 8 weist zusätzlich zu den Kopplungselementen 9', 9" hier beispielhaft zwischen den Kopplungselementen vorgesehenes Verbindungselement 15 auf, dass der Verbindung einer ansonsten frei herabhängenden Stelle des kombinierten Trag- und Sicherungsteils 8 mit dem Krafteinleitungsglied 2 und somit zur Herstellung einer Trageschlaufe für den Wiegevorgang dient. Das Verbindungselement ist beispielhaft von einem in Haken gebildet, kann aber auch andersartig aufgebaut sein, solange es in der beschriebenen Weise mit dem Krafteinleitungsglied 2 zusammenzuwirken vermag. Das Verbindungselement und ein Kopplungselement, insbesondere das zweite, vom Krafteinleitungsglied weiter entfernte Kopplungselement 9", können - anders als in den Figuren gezeigt - von einem einzigen Bauteil gebildet sein.

Figur 6 ist zu entnehmen, dass an dem kombinierten Trage- und Sicherungsteil 8 eine Messskala vorgesehen sein kann, so dass das Trage- und Sicherungsteil 8 auch als Maßband dienen kann. Zusätzlich oder alternativ zu einer Messskala kann vorgesehen sein, dass das kombinierte Trage- und Sicherungsteil 5 im ausgestreckten Zustand eine bekannte, vordefinierte Länge hat, die dem Nutzer das zügige Abmessen der Gepäckstückgröße ermöglicht. Schließlich kann das kombinierte Trage- und Sicherungsteil Mittel zum Aneinander-Anheften von aneinander anliegenden Abschnitten des Trage- und Sicherungsteils aufweisen. Neben dem in Figur 6 gezeigten Klettband kommen auch Druckknöpfe oder ähnliche Vorrichtungen in Betracht.

### Bezugszeichenliste

- 1: Griffteil
- 2: Krafteinleitungsglied
- 3: Gepäckschloss
- 4: Schließbügel
- 5: Schlossgehäuse
- 6: Aufnahme
- 7: Einhängeteil
- 8: kombiniertes Trage- und Sicherungsteil
- 9', 9": Kopplungsglieder
- 10: Griff eines Gepäckstücks
- 11: Handlauf eines Geländers
- 12: Haltetei
- 13: Einführöffnung
- 14: Verriegelung
- 15: Verbindungselement
- 16: Erweiterung

## Patentansprüche

1. Vorrichtung, die eine handgehaltene Gepäckwaage zum Wiegen von Gepäckstücken und ein Schloss (3) zum Verschließen oder ortsfestem Anschließen eines Gepäckstücks zu einer Kombinationsvorrichtung kombiniert, **dadurch gekennzeichnet, dass**
das Schloss (3) eine strukturell autarke Funktionseinheit der Kombinationsvorrichtung bildet.

2. Vorrichtung nach Anspruch 1, **dadurch gekennzeichnet, dass** die Vorrichtung ein Griffteil (1) aufweist, das vom Nutzer ergriffen wird, um das Gepäckstück für einen Wiegevorgang anzuheben, wobei das Schloss (3) ein Schlossgehäuse (5) aufweist, das als vom Griffteil (1) strukturell autarkes Bauteil in oder an dem Griffteil (1) angeordnetist.

3. Vorrichtung nach dem vorhergehenden Anspruch, **dadurch gekennzeichnet, dass** das Griffteil (1) eine Aufnahme bildet, in der das Schlossgehäuse (5) des Schlosses (3) aufgenommen ist.

4. Vorrichtung nach eine der beiden vorhergehenden Ansprüche, **dadurch gekennzeichnet, dass** das Schloss (3) ein Bügelschloss ist, dessen Schließbügel (4) aus dem Griffteil (1) herausragt.

5. Vorrichtung nach einem der vorhergehenden Ansprüche, **dadurch gekennzeichnet, dass** die Kombinationsvorrichtung ein kombiniertes Trage- und Sicherungsteil (8) aufweist, das sowohl zur Bildung einer Trageschlaufe, mit der das Gepäckstück beim Wiegevorgang an ein Krafteinleitungsglied (2) angehängt werden kann, als auch als Sicherungsteil zur Herstellung einer geschlossenen Sicherungsschlaufe zum Verschließen oder ortsfesten Anschließen des Gepäckstücks dient.

6. Vorrichtung nach dem vorhergehenden Anspruch, **dadurch gekennzeichnet, dass** das kombinierte Trage- und Sicherungsteil (8) Kopplungsglieder (9', 9") aufweist, die entweder zur Kopplung des kombinierten Trage- und Sicherungsteils (5) mit dem Krafteinleitungsglied (2) zur Herstellung einer Trageschlaufe für den Wiegevorgang oder zur Kopplung mit der Verriegelung des Schlosses (3) zur Herstellung einer Sicherungsschlaufe zum Verschließen oder ortsfesten Anschließen des Gepäckstücks verwendet werden können.

7. Vorrichtung nach einem der beiden vorhergehenden Ansprüche, **dadurch gekennzeichnet, dass** am kombinierten Trage- und Sicherungsteil (8) ein erstes Kopplungsglied (9') und ein zweites Kopplungsglied (9") im Abstand voneinander angeordnet sind, die zum Herstellen einer geschlossenen Sicherungsschlaufe beide mit einem Verriegelungsmechanismus (14) des Schlosses (3) verbunden werden.

8. Vorrichtung nach dem vorhergehenden Anspruch, **dadurch gekennzeichnet, dass** das erste Kopplungsglied (9') in einem Abstand von einer ersten Stelle des Trage- und Sicherungsteils (8) angeordnet ist, an der das Trage- und Sicherungsteil (5) dauerhaft mit dem Krafteinleitungsglied (2) verbunden ist, wobei dieser Abstand so bemessen ist, dass der zwischen dem ersten Kopplungsglied (9') und der besagten ersten Stelle liegende Abschnitt (8') des Trage- und Sicherungsteils (8) bei einer Belastung der geschlossenen Sicherungsschlaufe entlastet bleibt.

9. Vorrichtung nach einem der beiden vorhergehenden Ansprüche, **dadurch gekennzeichnet, dass** zusätzlich zu den der Herstellung einer geschlossenen Sicherungsschlaufe dienenden Kopplungsgliedern (9', 9") ein Verbindungselement (15) vorgesehen ist, dass zur Herstellung einer Trageschlaufe mit dem Krafteinleitungsglied (2) vorübergehend verbunden oder daran eingehängt werden kann.

## Claims

1. Device which combines a hand-held luggage scale for weighing luggage items and a lock (3) for locking or securing in place a luggage item to a combination device, **characterised in that**
the lock (3) forms a structurally independent functional unit of the combination device.

2. Device according to claim 1, **characterised in that** the device has a handle part (1) which is held by the user to lift the luggage item in order to perform a weighing process, wherein the lock (3) has a lock body (5) which is arranged in or on the handle part (1) as a component structurally independent of the handle part (1).

3. Device according to the preceding claim, **characterised in that** the handle part (1) forms a receptacle in which the lock body (5) of the lock (3) is accommodated.

4. Device according to any one of the preceding claims, **characterised in that** the lock (3) is a U-lock whose shackle (4) projects from the handle part (1).

5. Device according to any one of the preceding claims, **characterised in that** the combination device has a combined supporting and securing part (8) which serves both to form a carrying strap, with which the luggage item can be hung on a force transmission member (2) during the weighing process as well as a securing part to form a closed securing strap for locking or securing in place the luggage item.

6. Device according to the preceding claim, **characterised in that** the combined supporting and securing part (8) has coupling elements (9', 9") which can be used either to connect the combined supporting and securing part (5) to the force transmission member (2) to form a carrying strap for the weighing process or to interact with the locking action of the lock (3) to form a securing strap for locking or securing in place the luggage item.

7. Device according to any one of the two preceding claims, **characterised in that** a first coupling member (9') and a second coupling member (9") are arranged on the combined supporting and securing part (8) at a distance from each other wherein both are connected to a locking mechanism (14) of the lock (3) to form a closed securing strap.

8. Device according to the preceding claim, **characterised in that** the first coupling member (9') is arranged at a distance from a first position of the combined supporting and securing part (8), to which the supporting and securing part (5) is permanently connected with the force transmission member (2), wherein this distance is dimensioned such that the section (8') of the supporting and securing part (8) located between the first coupling member (9') and the said first location remains unloaded when the closed securing strap has a load applied.

9. Device according to any one of the two preceding claims, **characterised in that,** in addition to the coupling members (9', 9") serving to form a closed securing strap, a connecting element (15) is provided which can be connected temporarily to the force transmission member (2) or can be hung on it to form a supporting strap.

## Revendications

1. Dispositif combinant une balance à bagage portative destinée au pesage de bagages et un cadenas (3) destiné au verrouillage ou à l'attache fixe d'un bagage à un dispositif de combinaisons, **caractérisé en ce que**
le cadenas (3) forme une unité fonctionnelle structuralement indépendante du dispositif de combinaisons.

2. Dispositif selon la revendication 1, **caractérisée en ce que** le dispositif présente une pièce servant de poignée (1) que l'utilisateur peut saisir afin de soulever le bagage pour le peser, sachant que le cadenas (3) présente un boîtier de serrure (5) qui est disposé comme composant structuralement indépendant de la pièce servant de poignée (1) dans ou sur la pièce servant de poignée (1).

3. Dispositif selon la revendication précédente, **caractérisé en ce que** la pièce servant de poignée (1) forme un support dans lequel le boîtier de serrure (5) du cadenas (3) est logé.

4. Dispositif selon l'une quelconque des deux revendications précédentes, **caractérisé en ce que** le cadenas (3) est un antivol en U dont le pêne en forme d'U (4) dépasse de la pièce servant de poignée (1).

5. Dispositif selon l'une quelconque des revendications précédentes, **caractérisé en ce que** le dispositif de combinaisons présente une pièce de support et de sécurité (8) laquelle sert à former une dragonne avec laquelle le bagage peut être suspendu à un élément d'application de force (2) lors du pesage, mais également de pièce de sécurité en vue de produire une boucle de sécurité fermée afin de verrouiller ou d'attacher fixement le bagage.

6. Dispositif selon la revendication précédente, **caractérisé en ce que** la pièce de support et de sécurité (8) présente des éléments d'accouplement (9', 9") qui peuvent être utilisés soit pour le couplage de la pièce de support et de sécurité (5) avec l'élément d'application de force (2) en vue de former une dragonne destinée au pesage, soit pour le couplage avec le système de verrouillage du cadenas (3) en vue de produire une boucle de sécurité fermée afin de verrouiller ou d'attacher fixement le bagage.

7. Dispositif selon l'une quelconque des revendications précédentes, **caractérisé en ce qu**'un premier élément d'accouplement (9') et un second élément d'accouplement (9") sont disposés à distance l'un de l'autre au niveau de la pièce de support et de sécurité (8) et raccordés à un mécanisme de verrouillage (14) du cadenas (3) en vue de produire une boucle de sécurité fermée.

8. Dispositif selon la revendication précédente, **caractérisé en ce que** le premier élément d'accouplement (9') est disposé à une distance d'un premier point de la pièce de support et de sécurité (8) à laquelle la pièce de support et de sécurité (5) est raccordée en permanence à l'élément d'application de force (2), sachant que cette distance est mesurée de telle sorte que la section (8') de la pièce de support et de sécurité (8) située entre le premier élément d'accouplement (9') et ledit premier point reste délestée lorsque la boucle de sécurité fermée est sollicitée.

9. Dispositif selon l'une quelconque des deux revendications précédentes, **caractérisé en ce qu**'outre les éléments d'accouplement (9', 9") servant à produire une boucle de sécurité fermée, un élément de raccordement (15) est prévu, avec lequel l'élément d'application de force (2) peut être raccordé ou y être accroché provisoirement afin de former une dragonne.
